# EUROPÄISCHE PATENTSCHRIFT

(11) **EP 0 552 630 B1**
(45) Veröffentlichungstag und Bekanntmachung des Hinweises auf die Patenterteilung: **17.04.1996**
(21) Anmeldenummer: 93100271.1
(22) Anmeldetag: 11.01.1993
(51) Int. Cl.: C08F 220/24, D06M 15/277

(54) **Fluorhaltige Copolymerisate und daraus hergestellte wässrige Dispersionen**
Fluor-containing copolymers and aqueous dispersions prepared from them
Copolymères contenant du fluor et dispersions aqueuses préparés de ces copolymères

(30) Priorität: 22.01.1992 DE 4201604
(43) Veröffentlichungstag der Anmeldung: 28.07.1993
(73) Patentinhaber: BAYER AG, D-51368 Leverkusen (DE)
(72) Erfinder: Michels, Gisbert, Dr., W-5000 Köln 80 (DE); Ehlert, Hans-Albert, Dipl.-Ing., W-5090 Leverkusen (DE)

(56) Entgegenhaltungen:
- US-A- 3 491 169
- US-A- 4 127 711

## Beschreibung

Die Erfindung betrifft Copolymerisate aus Perfluoralkylgruppen enthaltenden Monomeren, hydrophilen, ionischen und nicht ionischen Monomeren sowie weiteren Comonomeren. Die Erfindung betrifft weiterhin die Herstellung der Copolymerisate und wäßrige Dispersionen dieser Copolymerisate und ihre Verwendung zur Ausrüstung von textilen Materialien, Leder, Papier und mineralischen Substraten gegen Einwirkungen von Öl, Schmutz und Wasser.

Aus US 4 127 711, US 4 564 561, US 4 579 924 und US 4 366 299 ist bekannt, daß Copolymerisate aus Perfluoralkylgruppen enthaltenden Monomeren, hydrophilen, ionischen, beziehungsweise nicht ionischen Monomeren und gegebenenfalls weiteren Comonomeren herstellbar sind.

Nachteilig ist, daß entweder die aus diesen Copolymerisaten hergestellten Dispersionen Lösungsmittel enthalten, die bei der Applikation wegen des relativ niedrigen Flammpunktes besondere Sicherheitsmaßnahmen notwendig machen, oder die Herstellung der Dispersionen nur unter Zuhilfenahme von Emulgatoren möglich ist, die andererseits die gewünschten Wirkungen wiederum verringern, oder daß, um eine hohe Öl- und Wasserabweisung zu gewährleisten, ein sehr hoher Fluorgehalt nötig ist, der andererseits zu Verhärtungen auf den damit ausgerüsteten Substraten führt. Ein weiterer Nachteil ist die Tatsache, daß nach der Ausrüstung mit Perfluoralkylgruppen enthaltenden Copolymeren des Standes der Technik eine thermische Nachbehandlung zwingend erfolgen muß, um eine hohe Öl-und Wasserabweisung zu gewährleisten. Aus US 4 127 711 ist zwar bekannt, daß auch unter relativ milden Bedingungen von 80°C eine thermische Nachbehandlung erfolgen kann, jedoch ist diese Bedingung für bestimmte Anwendungen auch weiterhin von Nachteil.

Der Erfindung liegt daher die Aufgabe zugrunde, hochwirksame öl- und wasserabweisende Ausrüstungsmittel für Testilien, Leder, Papier und mineralische Substrate zu entwickeln, die ohne Verwendung von Emulgatoren als wäßrige Dispersion herstellbar sind, die weiterhin einen niedrigen Fluorgehalt besitzen als herkömmliche Ausrüstungsmittel und die zur Erreichung einer hohen Öl- und und Wasserabweisung ohne thermische Nachbehandlung einsetzbar sind.

Es wurde nun überraschend gefunden, daß Copolymerisate, bestehend aus Perfluoralkylgruppen enthaltenden Monomeren, hydrophilen, ionischen und hydrophilen, nichtionischen Monomeren sowie weiteren Monomeren geeignet sind für die Herstellung von wäßrigen Dispersionen zur öl- und wasserabweisenden Ausrüstung von Textilien, Papier, Leder und mineralischen Substraten, ohne daß ein sehr hoher Fluorgehalt nötig ist, ohne daß Emulgatoren zur Herstellung von Dispersionen aus diesen Copolymerisaten eingesetzt werden müssen und ohne daß eine thermische Nachbehandlung erfolgen muß.

Weiterhin sind die aus den Copolymerisaten hergestellten Dispersionen auch dann stabil, wenn der Lösungsmittelanteil so niedrig ist, daß Flammpunkte oberhalb von 100°C resultieren.

Die Erfindung betrifft daher fluorhaltige Copolymerisate die Comonomere in den folgenden Gewichtsprozenten, bezogen auf das Gesamtgewicht der Copolymerisate, einpolymerisiert enthalten:
a) 45 bis 75 % an Perfluoralkylgruppen enthaltenden (Meth)acrylaten der Formel

   CₙF₂ₙ₊₁-X-OCO-CR¹=CH₂ (I),

   in der
   - n: eine Zahl von 4 - 12, bevorzugt 6 - 10, darstellt;
   - R¹: Wasserstoff oder Methyl bedeutet und
   - X: für -(-CH₂-)ₘ-, -SO₂-NR-CH₂-CHR³- oder -O-(-CH₂-)ₘ- steht, wobei m eine Zahl von 1 bis 4 bedeutet, R für C₁-C₄-Alkyl und R³ für Wasserstoff oder Methyl stehen,
b) 10 bis 50 % an Monomeren der Formeln

   CH₂=CH-CO-OR⁴ (IIa)

   und/oder

   CH₂=C(CH₃)-CO-OR¹ (IIb),

   in denen
   - R⁴: für einen C₁-C₂₂-Alkylrest steht und
   - R¹: C₂-C₂₂-Alkyl bedeutet,
   wobei die Monomeren (IIa) und/oder (IIb) ganz oder teilweise durch eines oder mehrere Monomere der Gruppe aus Styrol, Acrylnitril, Vinylacetat, Vinylpropionat oder Methylmethacrylat ersetzt werden können;
c) 4 bis 30 % an Monomeren der Formel 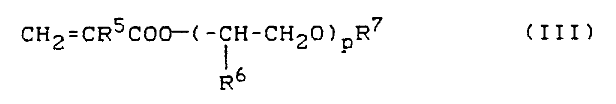 in der
   - R⁵ und R⁶: unabhängig für Wasserstoff oder Methyl stehen
   - R⁷: Wasserstoff oder C₁-C₈-Alkyl bedeutet und
   - p: für eine Zahl von 1 bis 50 steht, und
d) 1 bis 15 % an Monomeren der Formel

   CH₂=CR¹¹COOCH₂CH₂N(R⁸,R⁹) (IVa)

   in der
   - R⁸ und R⁹: unabhängig voneinander C₁-C₄-Alkyl bedeuten und
   - R¹¹: für Wasserstoff oder Methyl steht;
   oder an Monomeren der Formel (IVa) in ihrer quaternisierten Form der Formel

   [CH₂=CR¹¹-COO-CH₂CH₂N(R⁸, R⁹, R¹⁰)]^{⊕}y^{⊖} (IVb),

   in der zusätzlich
   - R¹⁰: C₁-C₄-Alkyl bedeutet und
   - Y: für ein Äquivalent eines ein- bis dreiwertigen Anions steht,
   oder an Monomeren der Formel (IVa) in ihrer N-oxidierten Form der Formel

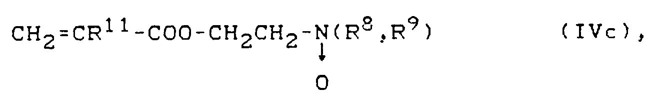

Die Erfindung betrifft weiterhin wäßrige Dispersionen aus den oben beschriebenen fluorhaltigen Copolymerisaten mit 5 bis 50 Gew.-%, bevorzugt 10 bis 40 Gew.-%, bezogen auf das Gesamtgewicht der Dispersionen, an von Wasser verschiedenen Inhaltsstoffen (Feststoffgehalt).

Bevorzugt können bis zu 50 relativen Gew.-% der Monomeren (IIa) und/oder (IIb) durch eines oder mehrere Monomere der Gruppe aus Styrol, Acrylnitril, Vinylacetat, Vinylpropionat oder Methylmethacrylat ersetzt werden.

In bevorzugter Weise nimmt bei Monomeren der Formel (I) n Werte von 6 bis 10 ein und in weiterhin bevorzugter Weise m den Wert 2. In noch weiterhin bevorzugter Weise bedeutet bei Monomeren der Formel (I) R¹ Wasserstoff.

In bevorzugter Weise bedeutet bei Monomeren der Formel (IIa) R⁴ Methyl, Ethyl, Propyl, Butyl, Hexyl oder Octyl.

In bevorzugter Weise bedeutet bei Monomeren der Formel (III) R⁶ Wasserstoff und der Index p eine Zahl von 3 bis 25. Dabei ist es erstaunlich, daß durch Einbau der Monomeren der Formel (III), in denen R⁶ Wasserstoff und der Index p eine Zahl von 5 bis 9 bedeutet, hervorragende Ergebnisse bei der Textilausrüstung erhalten werden.

In bevorzugter Weise bedeutet bei Monomeren der Formel (IVa,b,c) R⁸ und R⁹ Methyl. Bevorzuggte Anionen sind Chlorid, Acetat, Sulfat, Aryl- oder Alkylsulfonat oder Phosphat. Besonders bevorzugt sind Chlorid und Acetat.

In bevorzugter Weise enthalten die Copolymerisate die Monomeren in folgenden Gewichtsverhältnissen einpolymerisiert:

| | |
|---|---|
| 50 bis 70 % | solche der Formel (I), |
| 10 bis 44 % | solche der Formel (IIa) und/oder (IIb), |
| 5 bis 25 % | solche der Formel (III) und |
| 1 bis 10 % | solche der Formel (IVa) oder (IVb) oder (IVc), |

wobei die Monomeren der Formeln (IIa) und/oder (IIb) ganz oder teilweise durch eines oder mehrere Monomere aus der Gruppe von Styrol, Acrylnitril, Vinylacetat, Vinylpropionat oder Methylmethacrylat ersetzt werden können.

Die Herstellung der Copolymerisate erfolgt durch Polymerisation der Monomeren (I), (II), (III) und (IVa,b oder c) in Lösung. Als Lösungsmittel können Essigsäureethylester, Essigsäurebutylester, Aceton, Methylethylketon, Methylisobutylketon, Ethanol, Isopropanol und tert.-Butanol eingesetzt werden. Bevorzugt ist Aceton. Die Ausführung der Polymerisation kann dabei diskontinuierlich oder kontinuierlich erfolgen. Bei der diskontinuierlichen Fahrweise sind das Batch- und Zulaufverfahren zu nennen.

Als Initiatoren für die Polymerisation werden Radikalbildner, wie z.B. Azoverbindungen oder Peroxide eingesetzt. Bevorzugt sind Azoisobutyronitril, Azoisovaleronitril und tert-Butylperpivalat.

Zur Regulierung des Molekulargewichts können Kettenübertragungsmittel wie z.B. Dodecylmercaptan eingesetzt werden.

Die Polymerisationstemperatur beträgt 40 bis 100°C, vorzugsweise 50 bis 90°C.

Die Polymerisate können, falls erwünscht, durch Entfernung, beispielsweise durch Verdampfen der Lösungsmittel erhalten werden.

Die Herstellung von wäßrigen Dispersionen der erfindungsgemäßen Copolymerisate erfolgt, indem man zur Lösung der Copolymerisate nach ihrer Herstellung Wasser hinzugibt und das Lösungsmittel mindestens teilweise abdestilliert. Wird bei der Herstellung der Copolymerisate das Monomer (IVa) benutzt, so wird ein Neutralisationsmittel, in bevorzugter Weise Salzsäure oder Essigsäure, zusammen mit dem Wasser der Copolymerisatlösung zugesetzt.

Die Lösungsmittel können beispielsweise bei erhöhter Temperatur (40 - 90°C) im Vakuum entfernt werden. Es ist grundsätzlich möglich, einen größeren Teil des vorhandenen Lösungsmittels in den erfindungsgemäßen Dispersionen zu belassen. Aus Gründen der Arbeitssicherheit und der Arbeitshygiene wird das Lösungsmittel jedoch bevorzugt so weit abdestilliert, daß die Flammpunkte der Dispersion oberhalb von 100°C liegen. Die wäßrigen Dispersionen sind nach Entfernen des Lösungsmittels stabil.

Selbstverständlich ist es auch möglich, mehrere erfindungsgemäße fluorhaltige Copolymerisate, etwa solche mit unterschiedlichem Fluorgehalt, gemeinsam zur Herstellung der genannten wäßrigen Dispersionen einzusetzen, So kann man beispielsweise zwei oder mehr erfindungsgemäß hergestellte Dispersionen mit verschiedenen erfindungsgemäßen fluorhaltigen Copolymerisaten abmischen. Es können jedoch auch Dispersionen aus zwei oder mehr separat hergestellten, jedoch verschiedenen erfindungsgemäßen fluorhaltigen Copolymerisaten gemeinsam dispergiert werden. Ebenso ist es möglich, einer erfindungsgemäß hergestellten Dispersion eines oder mehrere erfindungsgemäße fluorhaltige Copolymere zuzusetzen, wobei diese Copolymere untereinander verschieden sind.

Die Erfindung betrifft weiterhin die Verwendung der erfindungsgemäßen wäßrigen Dispersionen als Ausrüstungsmittel für textile Substrate, insbesondere zur Behandlung von Teppichware. Die chemische Natur der zu behandelnden Substrate kann beispielsweise Zellulose, Zellulosederivate, Polyester, Polyamid und Polyacrylnitril sowie Wolle oder Seide sein, denen die erfindungsgemäßen Dispersionen oleophobe und hydrophobe Eigenschaften verleihen. Hierbei können in einer dem Fachmann bekannten Weise die erfindungsgemäßen wäßrigen Dispersionen mit weiteren fluorhaltigen oder fluorfreien Dispersionen abgemischt werden. Ein Beispiel für solche weiteren Dispersionen besteht in der Abmischung mit wäßrigen kolloidalen Suspensionen von Organosiloxanen, die beispielsweise aus DE-OS 33 07 420 bekannt sind.

Die Anwendung der erfindungsgemäßen wäßrigen Dispersionen auf den erwähnten Substraten erfolgt nach bekannten Verfahren, wie Auszieh-, Foulard-, Sprüh- oder Schaumverfahren ohne nachgeschaltete Temperaturbehandlung. In bevorzugter Ausführungsform werden die ausgerüsteten Substrate bei Temperaturen von 15 bis 40°C, bevorzugt bei Umgebungstemperatur getrocknet. Es ist selbstverständlich auch möglich bei höherer Temperatur, z.B. 150°C oder noch höher zu trocknen. Bezüglich der Öl-und Wasserabweisung werden dadurch aber keine weiteren Vorteile erhalten. Die gewünschten oleophoben und hydrophoben Eigenschaften werden gegenüber Ausrüstungsmitteln des Standes der Technik bereits bei geringeren Anwendungsmengen erreicht. In gleicher Weise können Leder und mineralische Substrate, beispielsweise Stein, ausgerüstet werden.

Die erfindungsgemäßen Dispersionen können gleichermaßen als Papierhilfsmittel zur Oleophob- und Hydrophob-Ausrüstung von Papier eingesetzt werden. Hierbei können in einer dem Fachmann bekannten Weise die erfindungsgemäßen Dispersionen mit weiteren bei der Papierherstellung bekannten Mittel eingesetzt werden: Stärke, Retentions-, Naßfest- und Leimungsmittel.

Im Vergleich zu einem handelsüblichen Oleophobmittel für Papier ([CF₃-(CF₂)₇-SO₂-N(C₂H₅)-C₂H₄-O]₂-P(O)-ONH₄, als Handelsprodukt Scotchban FC 807) zeigen die erfindungsgemäßen Dispersionen zusätzlich eine gute Hydrophobwirkung sowie eine Oleophobwirkung auch in Gegenwart von hartem Brauchwasser.

Die Anwendung der erfindungsgemäßen Dispersionen als Papierhilfsmittel erfolgt nach bekannten Verfahren, wie die Masse- und Oberflächenimprägnierung. Bevorzugt ist die Oberflächenimprägnierung.

### Beispiel 1

Man bereitet in einem Reaktor mit Thermometer, Rührer und Rückflußkühler eine Lösung aus
62,0 Gew.-Tle. CH₂=CHCOOCH₂CH₂C₈F₁₇
15,0 Gew.-Tle. n-Butylacrylat,
20,0 Gew.-Tle. 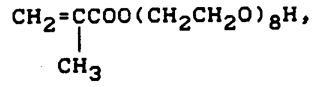
3,0 Gew.-Tle. Dimethylaminoethylmethacrylat in
285,0 Gew.-Tle. Aceton.

Die Lösung wird zunächst bei Raumtemperatur in einer Stickstoffatmosphäre gerührt, dann mit 2,25 Gew.-Tle. tert.-Butylperpivalat (75 %ig) versetzt und 8 h bei 73°C unter autogenem Druck gehalten. Nach dieser Zeit ist die Polymerisation beendet. Zur Polymerisatlösung, die auf 50°C abgekühlt wird, werden in 15 min eine Lösung von
3,9 Gew.-Tle. Essigsäure in
296,0 Gew.-Tle entionisiertem Wasser
bei 50°C zugegeben. Es wird 15 min. gerührt, und anschließend wird das Aceton destillativ bei 60°C/200-300 mbar entfernt. Man erhält eine stabile Polymerdispersion mit einem Feststoffgehalt von 25,55 Gew.-% und einem Fluorgehalt im Feststoff von 36,4 Gew.-%. Die Viskosität, gemessen bei 25°C mit einem Ubbelohde-Viskosimeter, beträgt 39,5 cSt. Der mittlere Durchmesser der Volumenverteilung D_{AV} (nach DIN 53206 vom August 1972) beträgt 30,6 nm.

### Beispiel 2 (Verwendung; Ausrüsten und Beurteilung von Teppichen)

Es wird eine wäßrige Dispersion nach Beispiel 1 hergestellt. 29 Gew.-Teile dieser Dispersion werden mit 60 Gew.-Teilen einer wäßrigen kolloidalen Suspension von Organosiloxanen, wie sie in DE 3 307 420 beschrieben sind, und 11 Gew.-Teilen entionisiertem Wasser abgemischt.

Eine 1,0 %ige wäßrige Verdünnung dieser Mischung wird auf einen Polyamid-Teppich (Tuftingware, Polgewicht: 500 g/m) so aufgebracht (Sprühauftrag), daß eine Auflage von 1,0 Gew.-% der obengenannten Mischung (bezogen auf das Polgewicht) auf dem Teppich verbleibt.

Eine weitere Applikationsmethode sieht folgendermaßen aus:
Ein Polyamid-Teppich (Tuftingware, Polgewicht: 500 g/m) wird mit einer 1,0 %igen wäßrigen Verdünnung dieser Mischung imprägniert und abgequetscht (Foulard-Verfahren), so daß eine Auflage von 1,0 Gew.-% der obengenannten Mischung (bezogen auf das Polgewicht) auf dem Teppich verbleibt.

Anschließend wird sowohl bei Raumtemperatur (25°C während 24 h) als auch bei 125 bis 150°C während 5 bis 15 Minuten getrocknet und kondensiert, 24 Stunden bei 23°C und 65 % relativer Luftfeuchte klimatisiert und dann die anwendungstechnischen Prüfungen durchgeführt.

Die Ergebnisse der anwendungstechnischen Prüfungen sind der nachfolgenden Tabelle zu entnehmen.

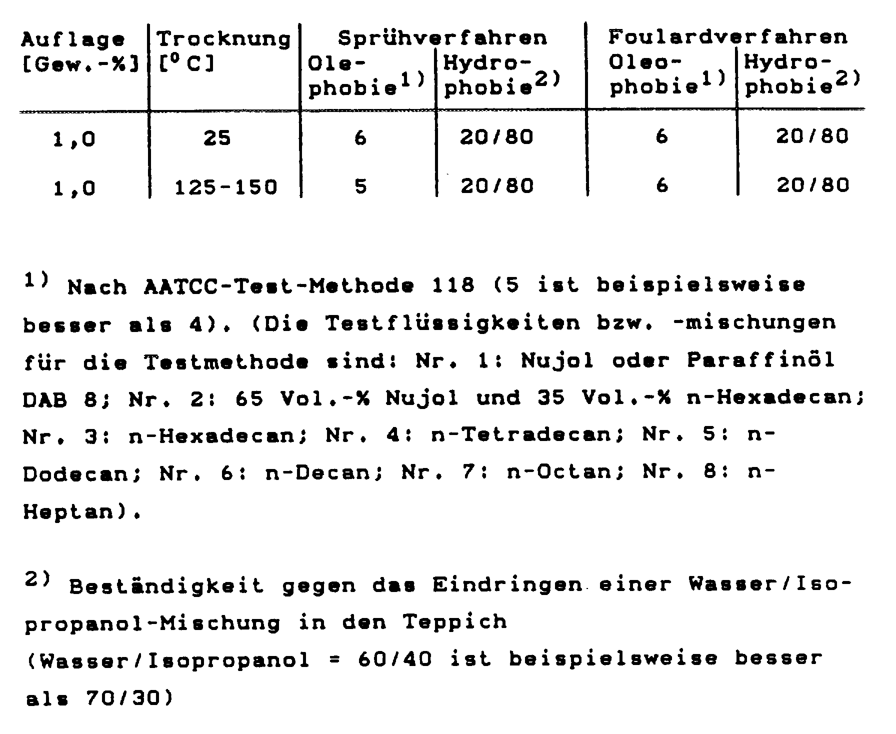

Es werden Tropfen von Wasser/Isopropanol-Mischungen (Verhältnis 90/10 bis 10/90) auf den Teppich aufgetragen. Das Testergebnis entspricht der Mischung mit höchstem Isopropanolanteil, die mindestens 20 Sekunden lang unverändert auf dem Teppich verbleibt und nicht in den Teppich eindringt.

### Vergleichsbeispiel 1 - 2

In der in Beispiel 1 angegebenen Weise werden die in der nachfolgenden Tabelle angegebenen Monomere copolymerisiert. In der Tabelle sind die erhaltenen Feststoffgehalte angegeben.

| Monomere [Gew.-Tle.] | Vergleichsbeispiele | |
|---|---|---|
| | 1 | 2 |
| CH₂=CHCOOCH₂CH₂C₈F₁₇ | 60 | 60 |
| CH₂=C(CH₃)COO(CH₂CH₂O)₈H | 35 | - |
| CH₂=C(CH₃)COO(CH₂CH₂O)₁₂H | - | 35 |
| Dimethylaminoethylmethacrylat | 5 | 5 |
| Feststoffgehalt [Gew.-%] | 24,67 | 25,02 |

### Beispiel 3 - 4

In der in Beispiel 1 angegebenen Weise werden die in der nachfolgenden Tabelle angegebenen Monomere copolymerisiert. In der Tabelle sind die erhaltenen Feststoffgehalte angegeben.

| Monomere [Gew.-Tle.] | Beispiele | |
|---|---|---|
| | 3 | 4 |
| CH₂=CHCOOCH₂CH₂C₈F₁₇ | 60 | 60 |
| CH₂=C(CH₃)COO(CH₂CH₂O)₈H | 20 | - |
| CH₂=C(CH₃)COO(CH₂CH₂O)₁₂H | - | 20 |
| n-Butylacrylat | 15 | 15 |
| Dimethylaminoethylmethacrylat | 5 | 5 |
| Feststoffgehalt [Gew.-%] | 24,67 | 25,02 |

### Beispiel 5

### (Verwendung, Ausrüsten und Beurteilung von Teppichen)

Ein Polyamid-Teppich (Tuftingware, Polgewicht: 500 g/m) wird mit einer 0,70%igen wäßrigen Verdünnung beziehungsweise einer 0,35%igen wäßrigen Verdünnung der nach Beispiel 3 und 4 und Vergleichsbeispielen 1 und 2 erhaltenen Dispersionen imprägniert und abgequetscht (Foulard-Verfahren), so daß eine Auflage von 0,70 Gew.-% beziehungsweise 0,35 Gew.-% der obengenannten Verdünnungen (bezogen auf das Polgewicht) auf dem Teppich verbleibt.

Anschließend wird bei Raumtemperatur (25°C während 24 h) getrocknet. 24 Stunden bei 23°C und 65 % relativer Luftfeuchte klimatisiert und dann die anwendungstechnischen Prüfungen gemäß Beispiel 2 durchgeführt. Die Ergebnisse sind der nachfolgenden Tabelle zu entnehmen.

| Dispersion | Auflage [Gew.-%] | Trocknung [°C] | Oleophobie | Hydrophobie |
|---|---|---|---|---|
| Beispiel 3 | 0,70 | 25 | 5 | 20/80 |
| | 0,35 | 25 | 4-5 | 20/80 |
| Beispiel 4 | 0,70 | 25 | 5 | 50/50 |
| | 0,35 | 25 | 4-5 | 50/50 |
| Vergleichsbeispiel 1 | 0,70 | 25 | 4 | 20/80 |
| | 0,35 | 25 | 3-4 | 20/80 |
| Vergleichsbeispiel 2 | 0,70 | 25 | 3-4 | 50/50 |
| | 0,35 | 25 | 3 | 50/50 |

Das Beispiel 3 im Vergleich zum Vergleichsbeispiel 1 und das Beispiel 4 im Vergleich zum Vergleichsbeispiel 2 zeigen, daß im Bereich der Hydrophobie auch bei nicht erfindungsgemäßen Zusammensetzungen akzeptable Werte erreicht werden; der Wert der Oleophobie sinkt jedoch von gewünschten Werten 5 auf nicht mehr akzeptierte Werte 4 oder darunter ab.

### Beispiel 6

In der in Beispiel 1 angegebenen Weise werden die in der nachfolgenden Tabelle angegebenen Monomere copolymerisiert.

| Monomere | Gew.-Teile |
|---|---|
| CH₂=CHCOOCH₂CH₂C₈F₁₇ | 70 |
| CH₂=C(CH₃)COO(CH₂CH₂O)₈H | 20 |
| Styrol | 4,2 |
| Acrylnitril | 2,8 |
| Dimethylaminoethylmethacrylat | 3,0 |
| Feststoffgehalt [Gew.-%] | 24,63 |
| Fluorgehalt im Feststoff [Gew.-%] | 41,1 |
| Viskosität [cSt/°C] | 46,2/25 |

Die nach Beispiel 6 hergestellte Dispersion ist zur oleophoben und hydrophoben Ausrüstung von Textilien, beispielsweise Tischwäsche und Arbeitsschutzkleidung, geeignet und verleiht den ausgerüsteten Textilien eine sehr gute Schmutzentfernbarkeit.

### Beispiel 7

Dieses Beispiel zeigt die gute Verwendbarkeit der neuartigen Hilfsmittel zur Oleophob- und Hydrophobausrüstung von Papier.

In der in Beispiel 1 angegebenen Weise werden die in der nachfolgenden Tabelle angegebenen Monomere copolymerisiert und in eine wäßrige Dispersion überführt.

| Monomere | Gew.-Teile |
|---|---|
| CH₂=CHCOOCH₂CH₂C₈F₁₇ | 73 |
| CH₂=C(CH₃)COO(CH₂CH₂O)₈H | 15 |
| Methylmethacrylat | 9 |
| Dimethylaminoethylmethacrylat | 3 |
| Feststoffgehalt (Gew.-%) | 24,45 |
| Fluorgehalt im Feststoff (Gew.-%) | 42,4 |
| Viskosität (cSt/°C) | 23,3/25 |

Es wurde folgende Papiersorte verwendet:
50 Teile gebleichter Nadelholzzellstoff,
50 Teile gebleichter Laubholzzellstoff,
10 % Clay-Asche,
Mahlgrad 35° SR,
pH-Wert: 7,2
flächenbezogene Masse: 80 g/m

Die Ausrüstung der Papiere erfolgte auf einer Laborleimpresse der Firma Mathis, Zürich/Schweiz, Typ HF. Als Imprägnierflotte wurde eine vorgegebene Menge (siehe Tabelle) des zu prüfenden Hilfsmittels in vollentsalztem Wasser bzw. Leitungswasser mit 17°dH verwendet. Die Naßaufnahme betrug ca. 80 %. Die Trocknung dieser Papiere erfolgt in einem Trockenzylinder während 1 min. bei 90°C. Anschließend wurden die Papiere 2 h bei Raumtemperatur klimatisiert.

### Beurteilung der Hydrophobie:

Zur Beurteilung der wasserabweisenden Wirkung wurde die Wasseraufnahme nach Cobb (DIN 53132) bei 60 s Prüfzeit bestimmt.

### Beurteilung der Oleophobie:

Zur Beurteilung der Öldichte wurde der Tappi-Test 454 ts-66 durchgeführt.

Die folgende Tabelle zeigt die Hydrophob- und Oleophobwirkung des erfindungsgemäßen Hilfsmittels. Im Vergleich zu einem handelsüblichen Oleophobmittel zeigen sich deutliche Vorteile in der Hydrophobwirkung sowie in der Oleophobwirkung in Gegenwrt von hartem Bauchwasser.

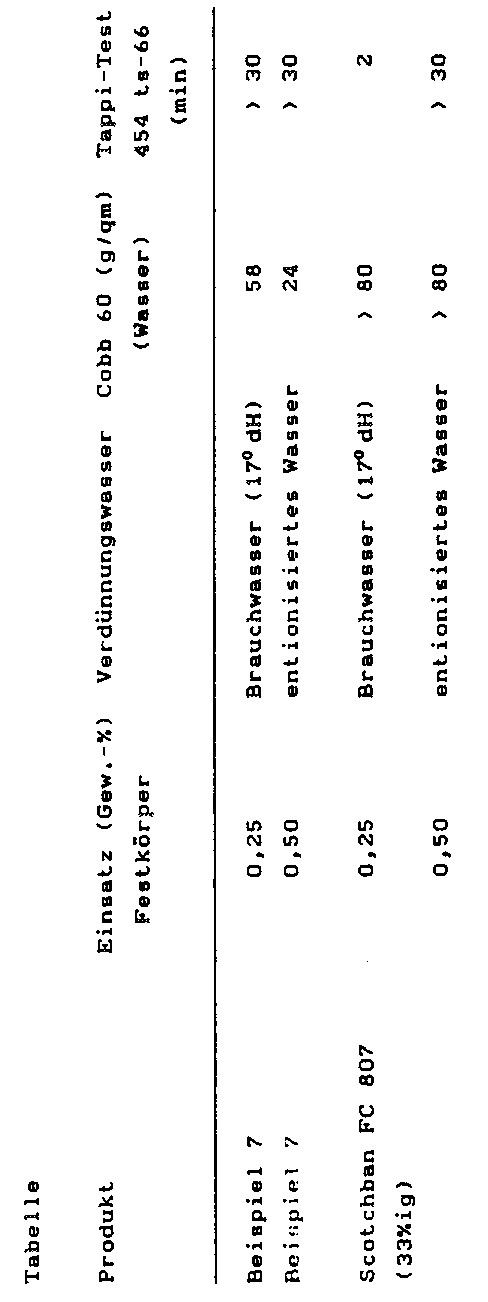

## Patentansprüche

1. Fluorhaltige Copolymerisate, die Comonomere in den folgenden Gewichtsprozenten, bezogen auf das Gesamtgewicht der Copolymerisate, einpolymerisiert enthalten:
a) 45 - 75 % an Perfluoralkylgruppen enthaltenden (Meth)acrylaten der Formel
CₙF₂ₙ₊₁-X-OCO-CR¹=CH₂ (I),
in der
n eine Zahl von 4 - 12 darstellt,
R¹ Wasserstoff oder Methyl bedeutet und
X für -(-CH₂-)ₘ-, -SO₂-NR-CH₂CHR³- oder -O-(CH₂)ₘ- steht, wobei m eine Zahl von 1 bis 4 bedeutet, R für C₁-C₄-Alkyl und R³ für Wasserstoff oder Methyl stehen,
b) 10 - 50 % an Monomeren der Formeln
CH₂=CH-CO-OR⁴ (IIa)
und/oder
CH₂=C(CH₃)-CO-OR¹ (IIb),
in denen
R⁴ für einen C₁-C₂₂-Alkylrest steht und
R¹ C₂-C₂₂-Alkyl bedeutet;
wobei die Monomeren (IIa) und/oder (IIb) ganz oder teilweise durch eines oder mehrere Monomere der Gruppe aus Styrol, Acrylnitril, Vinylacetat, Vinylpropionat oder Methylmethacrylat ersetzt werden können,
c) 4 - 30 % an Monomeren der Formel 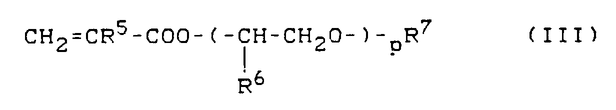 in der
R⁵ und R⁶ unabhängig voneinander für Wasserstoff oder Methyl stehen,
R⁷ Wasserstoff oder C₁-C₈-Alkyl bedeutet und
p für eine Zahl von 1 bis 50 steht, und
d) 1 - 15 % an Monomeren der Formel
CH₂=CR¹¹-COO-CH₂CH₂-N(R⁸,R⁹) (IVa),
in der
R⁸ und R⁹ unabhängig voneinander C₁-C₄-Alkyl bedeuten und
R¹¹ für Wasserstoff oder Methyl steht;
oder an Monomeren der Formel (IVa) in ihrer quaternisierten Form der Formel
[CH₂=CR¹¹-COO-CH₂CH₂-N(R⁸,R⁹,R¹⁰)]^{⊕}Y^{⊖} (IVb),
in der zusätzlich
R¹⁰ C₁-C₄-Alkyl bedeutet und
Y für ein Äquivalent eines ein- bis dreiwertigen Anions steht;
oder an Monomeren der Formel (IVa) in ihrer N-oxidierten Form der Formel

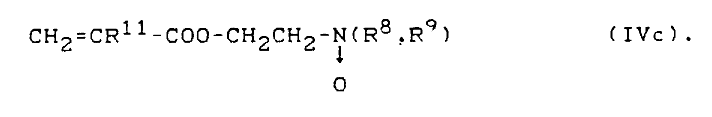

2. Copolymerisate nach Anspruch 1, dadurch gekennzeichnet, daß die Gewichtsprozente der Gruppen der Comonomeren folgende Werte annehmen:
a) 50 - 70 %
b) 10 - 44 %
c) 5 - 25 % und
d) 1 - 10 %
wobei die Monomeren unter b) ganz oder teilweise durch eines oder mehrere Monomere aus der Gruppe von Styrol, Acrylnitril, Vinylacetat, Vinylpropionat oder Methylmethacrylat ersetzt werden können.

3. Copolymerisate nach Anspruch 1, dadurch gekennzeichnet, daß bei den Monomeren der Formel (I) n Werte von 6 bis 10, unabhängig hiervon m einen Wert von 2 einnimmt und weiterhin hiervon unabhängig R¹ Wasserstoff bedeutet.

4. Copolymerisate nach Anspruch 1, dadurch gekennzeichnet, daß bei Monomeren der Formel (IIa) R⁴ Methyl, Ethyl, Propyl, Butyl, Hexyl oder Octyl bedeutet.

5. Copolymerisate nach Anspruch 1, dadurch gekennzeichnet, daß bei Monomeren der Formel (III) R⁶ Wasserstoff bedeutet und unabhängig hiervon der Index p eine Zahl von 3 bis 25 darstellt.

6. Copolymerisate nach Anspruch 1, dadurch gekennzeichnet, daß bei Monomeren der Formel (IVa), (IVb) bzw. (IVc) die Reste R⁸ und R⁹ gleich sind und Methyl bedeuten und unabhangig hiervon Y^{⊖} Chlorid, Acetat, 1/2 Sulfat, Aryl- oder Alkylsulfonat oder 1/3 Phosphat ist.

7. Wäßrige Dispersionen aus fluorhaltigen Copolymerisaten nach Ansprüchen 1 bis 6 mit 5 bis 50 Gew.-%, bezogen auf das Gesamtgewicht der Disperionen, an von Wasser verschiedenen Inhaltsstoffen (Feststoffgehalt).

8. Verwendung der wäßrigen Dispersionen nach Anspruch 7 zur Ausrüstung von Textilien, Leder, Papier und mineralischen Substraten zur Öl-, Schmutz- und Wasserabweisung.

9. Verwendung nach Anspruch 8 zur Ausrüstung von Teppichware.

10. Verwendung nach Anspruch 8, wobei die ausgerüsteten Materalien bei Temperaturen von 15 bis 40°C, bevorzugt bei Umgebungstemperatur getrocknet werden.

## Claims

1. Fluorine-containing copolymers which contain copolymerised comonomers in the following percentages by weight, relative to the total weight of the copolymers:
a) 45 - 75 % of (meth)acrylates containing perfluoroalkyl groups, of the formula
CₙF₂ₙ₊₁-X-OCO-CR¹=CH₂ (I),
in which
n represents a number from 4 - 12,
R¹ denotes hydrogen or methyl and
X represents - (CH₂)ₘ-, -SO₂-NR-CH₂-CHR³ or -O-(CH₂)ₘ-, where m denotes a number from 1 to 4, R represents C₁-C₄-alkyl and R³ represents hydrogen or methyl,
b) 10 - 50 % of monomers of the formulae
CH₂=CH-CO-OR⁴ (IIa)
and/or
CH₂=C(CH₃)-CO-OR¹ (IIb),
in which
R⁴ represents a C₁-C₂₂-alkyl radical and
R¹ denotes C₂-C₂₂-alkyl,
wherein the monomers (IIa) and/or (IIb) can be completely or partially replaced by one or more monomers of the group consisting of styrene, acrylonitrile, vinyl acetate, vinyl propionate and methyl methacrylate,
c) 4 - 30 % of monomers of the formula 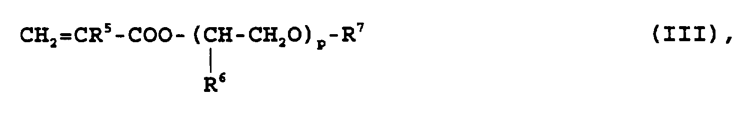 in which
R⁵ and R⁶ independently of one another represent hydrogen or methyl,
R⁷ denotes hydrogen or C₁-C₈-alkyl and
p represents a number from 1 to 50, and
d) 1 - 15 % of monomers of the formula
CH₂=CR¹¹COO-CH₂CH₂-N(R⁸,R⁹) (IVa),
in which
R⁸ and R⁹ independently of one another denote C₁-C₄-alkyl and
R¹¹ represents hydrogen or methyl,
or of monomers of the formula (IVa) in their quaternised form of the formula
[CH₂=CR¹¹-COO-CH₂CH₂-N(R⁸,R⁹,R¹⁰)]^{⊕}Y^{⊖} (IVb),
in which additionally
R¹⁰ denotes C₁-C₄-alkyl and
Y represents an equivalent of a mono- to trivalent anion,
or of monomers of the formula (IVa) in their N-oxidised form of the formula

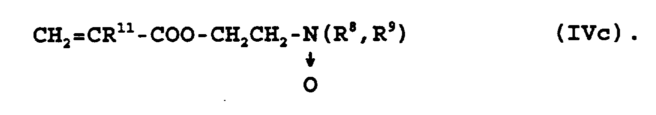

2. Copolymers according to Claim 1, characterised in that the percentages by weight of the groups of the comonomers assume the following values:
a) 50 - 70 %
b) 10 - 44 %
c) 5 - 25 % and
d) 1 - 10 %
wherein the monomers under b) can be completely or partially replaced by one or more monomers of the group consisting of styrene, acrylonitrile, vinyl acetate, vinyl propionate and methyl methacrylate.

3. Copolymers according to Claim 1, characterised in that in the case of the monomers of the formula (I) n assumes values from 6 to 10, independently thereof m assumes a value of 2 and furthermore independently thereof R¹ denotes hydrogen.

4. Copolymers according to Claim 1, characterised in that, in the case of monomers of the formula (IIa), R⁴ denotes methyl, ethyl, propyl, butyl, hexyl or octyl.

5. Copolymers according to Claim 1, characterised in that, in the case of monomers of the formula (III), R⁶ denotes hydrogen and, independently thereof, the index p represents a number from 3 to 25.

6. Copolymers according to Claim 1, characterised in that, in the case of monomers of the formula (IVa), (IVb) or (IVc), the radicals R⁸ and R⁹ are identical and denote methyl and, independently thereof, Y^{⊖} is chloride, acetate, 1/2 sulphate, aryl- or alkylsulphonate or 1/3 phosphate.

7. Aqueous dispersions of fluorine-containing copolymers according to Claims 1 to 6 containing 5 to 50 % by weight, relative to the total weight of the dispersions, of ingredients other than water (solid content).

8. Use of the aqueous dispersions according to Claim 7, for the finishing of textiles, leather, paper and mineral substrates for oil-, dirt- and water-repellency.

9. Use according to Claim 8 for the finishing of carpet goods.

10. Use according to Claim 8, the finished materials being dried at temperatures from 15 to 40°C, preferably at ambient temperature.

## Revendications

1. Copolymères fluorés contenant, à l'état polymérisé, les comonomères ci-après aux proportions en poids indiquées par rapport au poids total des copolymères :
a) 45 à 75 % de (méth)acrylates contenant des groupes perfluoralkyle, de formule :
CₙF₂ₙ₊₁-X-OCO-CR¹=CH₂ (I),
dans laquelle
n est un nombre allant de 4 à 12,
R¹ représente l'hydrogène ou un groupe méthyle et
X représente -(-CH₂-)ₘ-, -SO₂-NR-CH₂-CHR³- ou -O-(-CH₂-)ₘ-, m étant un nombre allant de 1 à 4, R un groupe alkyle en C₁-C₄ et R³ l'hydrogène ou un groupe méthyle,
b) 10 à 50 % de monomères de formules
CH₂=CH-CO-OR⁴ (IIa)
et/ou
CH₂=C(CH₃)-CO-OR¹ (IIb),
dans lesquelles
R⁴ représente un groupe alkyle en C₁-C₂₂ et
R¹ représente un groupe alkyle en C₂-C₂₂,
les monomères (IIa) et/ou (IIb) pouvant être remplacés en totalité ou en partie par un ou plusieurs monomères du groupe du styrène, de l'acrylonitrile, de l'acétate de vinyle, du propionate de vinyle ou du méthacrylate de méthyle,
c) 4 à 30 % de monomères de formule: 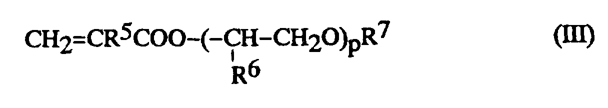
R⁵ et R⁶ représentent chacun, indépendamment l'un de l'autre, l'hydrogène ou un groupe méthyle,
R⁷ représente l'hydrogène ou un groupe alkyle en C₁-C₈ et
p est un nombre allant de 1 à 50, et
d) 1 à 15 % de monomères de formule:
CH₂=CR¹¹COOCH₂CH₂N(R⁸,R⁹) (IVa)
dans laquelle
R⁸ et R⁹ représentent chacun, indépendamment l'un de l'autre, un groupe alkyle en C₁-C₄ et
R¹¹ représente l'hydrogène ou un groupe méthyle,
ou de monomères de formule (IVa) à l'état quaternisé, de formule :
[CH₂=CR¹¹-COO-CH₂CH₂N(R⁸,R⁹,R¹⁰)]^{⊕}Y^{⊖} (IVb),
dans laquelle, en outre,
R¹⁰ représente un groupe alkyle en C₁-C₄ et
Y représente un équivalent d'un anion mono- à tri-valent,
ou de monomères de formule (IVa) à l'état de N-oxydes de formule:

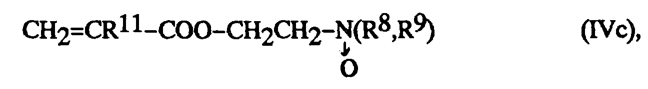

2. Copolymères selon la revendication 1, caractérisés en ce que les proportions en poids des comonomères des différents groupes sont les suivantes :
a) 50 à 70 %
b) 10 à 44 %
c) 5 à 25 % et
d) 1 à 10 %,
les monomères mentionnés sous b) pouvant être remplacés en totalité ou en partie par un ou plusieurs monomères du groupe du styrène, de l'acrylonitrile, de l'acétate de vinyle, du propionate de vinyle ou du méthacrylate de méthyle.

3. Copolymères selon la revendication 1, caractérisés en ce que, pour les monomères de formule (I), n est un nombre allant de 6 à 10, indépendamment, m est égal à 2 et toujours indépendamment, R¹ représente l'hydrogène.

4. Copolymère selon la revendication 1, caractérisé en ce que, pour les monomères de formule (IIa), R⁴ représente un groupe méthyle, éthyle, propyle, butyle, hexyle ou octyle.

5. Copolymères selon la revendication 1, caractérisés en ce que, pour les monomères de formule (III), R⁶ représente l'hydrogène et, indépendamment, l'indice p est un nombre allant de 3 à 25.

6. Copolymères selon la revendication 1, caractérisés en ce que, pour les monomères de formules (IVa), (IVb) et (IVc), les symboles R⁸ et R⁹ sont identiques et représentent chacun un groupe méthyle et, indépendamment, Y^{⊖} représente un anion chlorure, acétate, 1/2 sulfate, aryl- ou alkyl-sulfonate ou 1/3 phosphate.

7. Dispersions aqueuses des copolymères fluorés selon les revendications 1 à 6, à des teneurs de 5 à 50 % en poids, par rapport au poids total des dispersions, en composants autres que l'eau (teneur en matières solides).

8. Utilisation des dispersions aqueuses selon la revendication 7 pour l'apprêtage des textiles, du cuir, du papier et de substrats minéraux auxquels on veut conférer des propriétés oléofuges, antisalissures et hydrofuges.

9. Utilisation selon la revendication 8 pour l'apprêtage des tapis.

10. Utilisation selon la revendication 8, dans laquelle les matières apprêtées sont séchées à des températures de 15 à 40°C et de préférence à température ambiante.
